# EUROPÄISCHE PATENTSCHRIFT

(11) **EP 1 230 857 B1**
(45) Veröffentlichungstag und Bekanntmachung des Hinweises auf die Patenterteilung: **16.06.2004**
(21) Anmeldenummer: 02002965.8
(22) Anmeldetag: 11.02.2002
(51) Int. Cl.: A21C 3/02

(54) **Führungsscheiben in einem Teigbandformer**
Guide disc in a dough sheeter
Rondelle de guidage dans un dispositif de fabrication d'une bande de pâte

(30) Priorität: 12.02.2001 DE 10106796
(43) Veröffentlichungstag der Anmeldung: 14.08.2002
(73) Patentinhaber: Fritsch GmbH, 97348 Markt Einersheim (DE)
(72) Erfinder: Wehner, Hans- Joachim, 49733 Haren (DE); Bernhardt, Udo, 97346 Iphofen (DE)
(74) Vertreter: Götz, Georg, Dipl.-Ing.

(56) Entgegenhaltungen:
- EP-A- 0 947 136
- US-A- 1 585 724
- US-A- 1 931 614
- US-A- 5 558 885

## Beschreibung

Die Erfindung betrifft einen Teigbandformer mit wenigstens zwei derart gegenüberliegenden Formungswalzen, daß ein formgebender Teigwalzspalt oder sonstiger Teigdurchgang gebildet ist. Wenigstens zwei Führungsscheiben sind an den Stirnseiten der Formungswalzen derart angeordnet und so groß dimensioniert, daß sie den Teigwalzspalt oder Teigdurchgang quer zu dessen Durchgangsrichtung beidseits bzw. an beiden Stirnseiten überdecken oder abschließen. Ferner betrifft die Erfindung eine Anordnung eines solchen Teigbandformers mit einem Trichter für ungeformte Teigmasse, wovon aus der Teigdurchgang eingangsseitig mit Teigmasse gespeist wird.

Bei bekannten Zwei-Walzen-Ausformsystemen etwa dieser Art (US-A-2 699 737, DE 690 17 688 T2) ist auf die Stirnseite wenigstens einer der Formungswalzen eine Führungsscheibe so zentrisch angebracht, daß sich deren Drehachse mit der Drehachse der Formungswalze deckt. Mit anderen Worten, nach dem Stand der Technik sind die Formungswalze und die Führungsscheibe zueinander koaxial angeordnet. Zudem sind die Formungswalze und die Führungsscheibe miteinander drehfest verbunden, so daß sich beide synchron zueinander drehen. Damit soll erreicht werden, auch im Randbereich des zu formenden Teigbands eine Anformung und einen Teigmaterialfluß beim Übergang von einem etwaigen Teigtrichter zum Teigdurchgang und zu dessen Auslaßbereich zu erzielen. Gleichwohl reißt besonders bei relativ weichen Teigen bei der Teigbandformung der Randbereich stark auf. Gerade bei weichen Teigen besteht das Problem, daß der Teig nicht sehr stark komprimiert werden darf, das heißt, es muß mit sehr breiten Walzspalten oder Teigdurchgängen gearbeitet werden. Dieses Problem verschärft sich noch, wenn sehr schmale Teigbänder mit entsprechend schmalen Formungswalzen gebildet werden sollen. Ein weiterer Nachteil bei Teigbändern mit gerissenen bzw. unterbrochenen Rändern besteht in dem großen Anfall an Restteig.

Der Erfindung liegt die Aufgabe zugrunde, den Teigbandformer der eingangs genannten Art so zu verbessern, daß auch bei sehr weichem Teigmaterial ein ausreichender Materialfluß im Randbereich des Teigbandes gewährleistet und dort ein Kleben an Begrenzungswänden eines Trichters oder Walzgeräts weitgehend vermieden ist. Diese Ziele sollen auch in Verbindung mit einem Trichter für Teigmasse erreichbar sein, der unmittelbar vor dem Teig-Walzspalt oder Teigdurchgang angeordnet ist.

Zur Lösung wird auf den im Patentanspruch 1 angegebenen Teigbandformer hingewiesen. Weitere vorteilhafte Ausgestaltungen ergeben sich aus den abhängigen Ansprüchen.

Indem erfindungsgemäß die Drehachse der Führungsscheibe gegenüber der der Formungswalze zweckmäßig in Richtung zum Inneren des Teigdurchgangs versetzt wird, wird der mit der Führungsscheibe erzielbare Überdeckungsbereich für den Teigdurchgang zwischen den Formwalzen vergrößert. Mit dem größeren Überdeckungsbereich wird eine effektivere Förderung des zu bildenden Teigbands in dessen Randbereich erreicht. Dadurch läßt sich ein Teigband mit im Vergleich zum Stand der Technik glatterem, längsseitigem Rand produzieren. Die Mitführ-Effektivität der Führungsscheibe ist durch die gegenüber der Formungswalze dezentrale oder exzentrische Anordnung der Führungsscheibe erhöht. Dem dient auch die Ausbildung der Erfindung, wonach die Führungsscheiben-Drehachse auf der Seite der mittleren Querschnittsachse der Formungswalze verläuft, die dem Teigdurchgang, insbesondere dessen Eingang oder Ausgang am nächsten liegt. Damit ist dafür Sorge getragen, daß sich von der Stirnseite der Führungsscheibe der größte Teil in den seitlich offenen Bereich des Teigdurchgangs erstreckt.

Vor allem im Fall von Mehr-Walzen-Ausformsystemen ist die weitere Erfindungsausbildung vorteilhaft, wonach die Führungsscheibe die Stirnseiten von zwei oder mehr Formungswalzen ganz oder teilweise abdeckt. Dazu lassen sich die Führungsscheiben mit entsprechendem Durchmesser leicht dimensionieren.

Vorzugsweise sind die eine oder mehreren Führungsscheiben so anzuordnen, daß sie hauptsächlich den Eingangs- und/oder Ausgangsbereich des Teigdurchgangs abdecken. Ein Vorteil besteht darin, daß bei ausreichender Abdeckung des Eingangs in Zusammenarbeit mit einem Trichter für umgeformte Teigmasse diese besonders fließend und schonend im Randbereich aus dem Trichter herausbefördert werden kann.

Die Nachform- und Transporteffektivität für das zu bildende Teigband in seinem Randbereich läßt sich nach einer Erfindungsausbildung dadurch fördern, daß wenigstens eine der Führungsscheiben mit einem eigenen Antrieb versehen ist. So kann sich die Führungsscheibe asynchron zur Formungswalze drehen und mit anderer Drehzahl als die Formungswalze laufen. Zweckmäßig ist es, die Umfangsgeschwindigkeit bzw. Drehzahl der Führungsscheibe höher einzustellen als die der Formungswalze.

Als praktische Realisierung der Antriebsmittel für die Führungsscheibe eignen sich Zahnradgetriebe beispielsweise mit einem an der Stirnseite der Führungsscheibe befestigten Zahnkranz. Derartige Getriebe lassen sich kostengünstig installieren und sind für die vorliegenden Genauigkeitsanforderungen ausreichend.

Von der allgemeinen erfinderischen Idee ist auch die Anordnung des Teigbandformers mit einem Trichter für ungeformte Teigmasse umfaßt, wobei ein Teil der Trichterwandung von der rotierenden Führungsscheibe gebildet wird. Hierdurch wird eine zusätzliche Förderung der Teigmasse im Randbereich des Trichter-Querschnitts bewirkt. Es ergibt sich eine Erhöhung der Transporteffektivität für die Teigmasse aus dem Trichter, wobei ein Ankleben besonders weicher Teigmasse an der Trichterwandung im Übergang zum Teigdurchgang weitgehend vermieden/eingeschränkt ist.

Weitere Einzelheiten, Merkmale, Vorteile und Wirkungen auf der Basis der Erfindung ergeben sich aus der nachfolgenden Beschreibung bevorzugter Ausführungsbeispiele der Erfindung und den Zeichnungen. Diese zeigen in:
- Fig. 1 - 4: jeweils in schematischer Seitenansicht unterschiedliche, erfindungsgemäße Anordnungen von Formungswalzen mit Führungsscheiben
- Fig. 5: in perspektivischer Darstellung eine Teigverarbeitungsmaschine mit erfindungsgemäßem Teigbandformer
- Fig. 6: in perspektivischer Darstellung einen Detailbereich der Teigverarbeitungsmaschine gemäß Fig. 5.

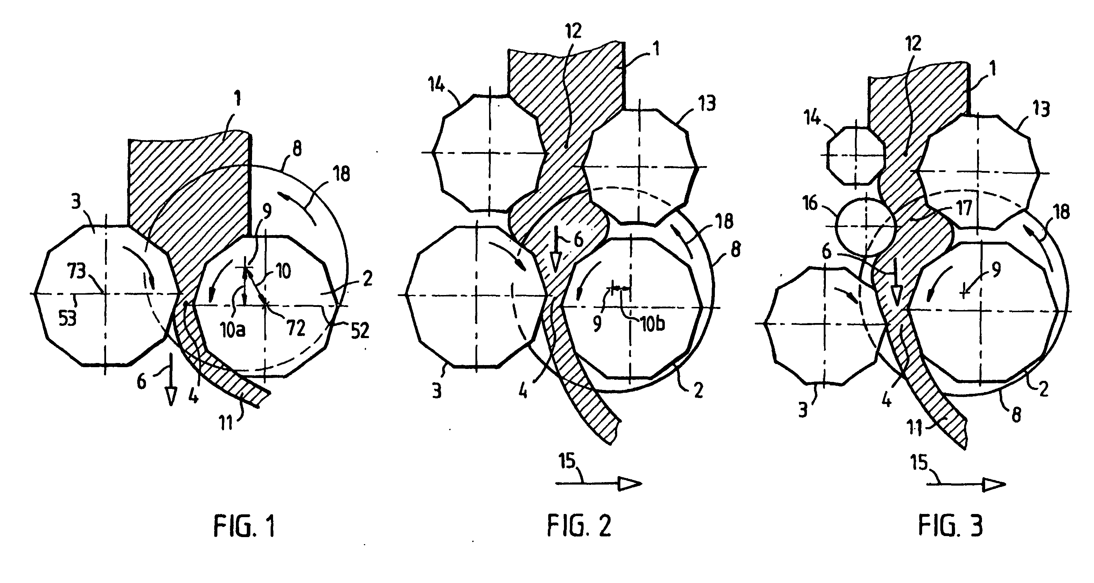

Gemäß Fig. 1 ist für ungeformte Teigmasse 1 in einem (in Fig. 1 nicht dargestellten) Trichter im Anschluß an dessen Ausgang durch eine vordere Formungswalze 2 und eine hintere, gegenüberliegende Formungswalze 3 ein Teigwalzdurchgang 4 gebildet. Die beiden Formungswalzen 2, 3 liegen einander derart gegenüber, daß deren mittlere Querschnittslinien 52, 53 in Durchgangsrichtung 6 des Teigwalzdurchgangs 4 versetzt verlaufen. Die beiden Querschnittslinien 52 bzw. 53 sind von der jeweiligen Drehachse 72, 73 der beiden Formungswalzen 2, 3 senkrecht durchsetzt.

Gemäß Fig. 1 ist femer mindestens eine Führungsscheibe 8 angeordnet, welche sich in der Ansicht gemäß Fig. 1 hinter den beiden Formungswalzen 2, 3 befindet (wie gestrichelt angedeutet). Erfindungsgemäß ist die Führungsscheibe 8 mit einer eigenen, unabhängigen Drehachse 9 realisiert, die zu den Drehachsen 72, 73 der Formungswalzen 2, 3 parallel und in einem gleichmäßigen Abstand 10 verläuft. Darüber hinaus ist die Führungsscheibe 8 ersichtlich mit einem deutlich größeren Durchmesser gestaltet als die jeweiligen Formungswalzen 2, 3. Durch den Abstand 10 bzw. Versatz der Führungsscheiben-Drehachse 9 gegenüber den Drehachsen 72, 73 der Formungswalzen 2, 3 sowie durch den vergrößerten Führungsscheiben-Durchmesser wird erreicht, daß die Führungsscheibe einen großen Teil des Einlaßbereichs aus dem Trichter in den Teigwalzdurchgang 4 sowie den Auslaßbereich des Teigwalzdurchgangs 4 seitlich zur Formung und zum Halten der Ränder des zu formenden bzw. geformten Teigbands 11 abdeckt. Dazu trägt auch die Anordnung bzw. der Verlauf der Führungsscheiben-Drehachse 9 bei, indem diese gemäß gezeichneten Beispiel von der vorderen Formungwalze 2 diejenige Querschnittshälfte durchsetzt, die dem Teigwalzdurchgang 4 am nächsten liegt. Zudem verläuft die Führungsscheiben-Drehachse 9 in demjenigen (oberen) Formungswalzenquadranten, welcher dem Einlaßbereich des Teigwalzdurchgangs 4 und/oder einem etwa angeordneten Trichter bzw. der ungeformten Teigmasse 1 am nächsten liegt. Natürlich liegt es auch im Rahmen der Erfindung, die Führungsscheiben-Drehachse 9 zum Beispiel durch den (unteren) Formungswalzenquadranten verlaufen zu lassen, der dem Auslaßbereich des Teigwalzdurchgangs 4 am nächsten liegt.

Die Ausführung nach Fig. 2 unterscheidet sich von der nach Fig. 1 durch einen Vorform-Teigdurchgang 12, der von zwei Vorformungswalzen 13, 14 definiert ist, die entsprechend den nachgeordneten Formungswalzen 2, 3 angeordnet sind. Relativ zu den Walzen 2, 3, 13, 14 ist die Führungsscheibe 8 derart angeordnet, daß sie die in Teigförderrichtung 15 vordere Formungswalze 2 vollständig und die den nachgeordneten Teigwalzdurchgang 4 begrenzende Formungswalze 3 sowie die den Vorform-Teigdurchgang 12 mit begrenzende, in Teigförderrichtung 15 vordere Vorformungswalze 13 jeweils teilweise stimseitig überdeckt. Dadurch wird - analog wie in Fig. 1 - eine Förderwirkung sowie Formgebung auf den Rand des zu bildenden Teigbandes 11 ausgeübt. Zur Aufnahme und Zuführung ungeformter Teigmasse 1 kann - analog wie bei Fig. 1 - auch nach Fig. 2 den Vorformungswalzen 13, 14 ein (zeichnerisch nicht dargestellter) Trichter vorgeschaltet sein.

Entsprechendes gilt für die Ausführungsform nach Fig. 3 bezüglich der dortigen Vorformungswalzen 13, 14. Während nach Fig. 2 die Führungsscheibe 8 drei Walzen 2, 3, 13 überdeckt, ist nach dem Ausführungsbeispiel der Fig. 3 zu den drei genannten Walzen noch zusätzlich eine Zwischenwalze 16 angeordnet und zumindest teilweise überdeckt. Diese bildet gleichzeitig mit den beiden schräg gegenüberliegenden, vorderen Vorformungs- und Formungswalzen 13 bzw. 2 einen Teig-Zwischendurchgang 17, der ebenso wie der nachgeordnete Teigwalzdurchgang 4 von der Führungsscheibe 8 teiglängsseitig vollständig abgedeckt ist. Aufgrund der die Teigdurchgangsrichtung 6 fördernden Drehrichtung 18 der Führungsscheibe 8 wird die Förderung der Teigmasse nebst Formgebung im Sinne eines glatten Teigrandes bewirkt.

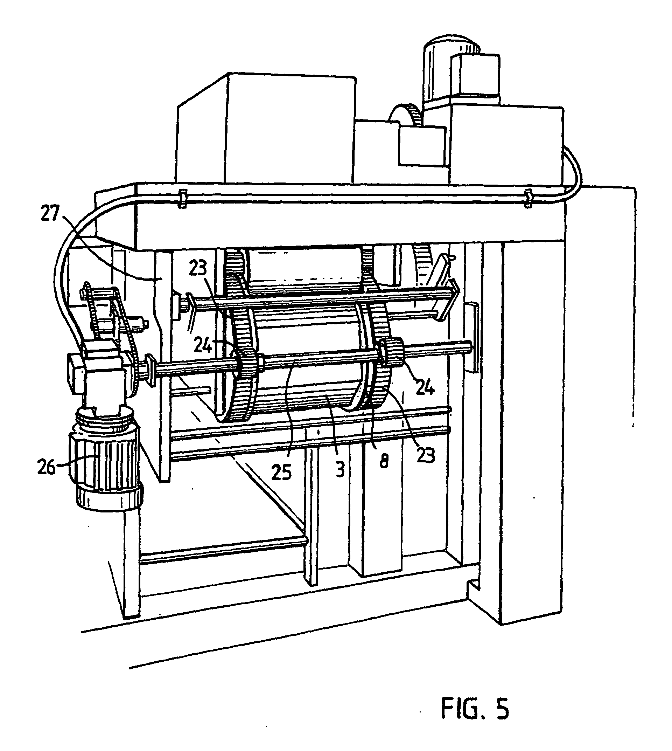

Gemäß Fig. 4 ist die Wandung eines Trichters 19 für ungeformte Teigmasse 1 im unteren Auslaßbereich mit einer rundlich verlaufenden Ausnehmung oder Aussparung 20 gestaltet. An dem entsprechend gebogen verlaufenden Rand 20a der Trichterwandung verläuft die Führungsscheibe 8 mit ihrem Umfang so nah und komplementär, daß ein Austreten auch von besonders weichem Teig im wesentlichen verhindert ist. Mit anderen Worten, die Trichterwandung ist gemäß Fig. 4 zweiteilig ausgebildet, nämlich mit einem feststehenden bzw. unbeweglichen Teil und einem sich in Teigdurchgangsrichtung bewegenden Teil, der durch einen Sektor 21 der Führungsscheibe gebildet ist. Dieser Sektor 21 deckt die Aussparung 20 der Wandung des Trichters 19 komplementär ab. Wegen des damit erzielten, besonderen Teig-Fördereffekts und - Formgebungseffekt wird auf die vorausgegangenen Ausführungen verwiesen. Im Ausgangsbereich des Teigwalzdurchgangs 4 entsteht so ein fertig geformtes Teigband 11 mit besonders glattem Rand, das auf einem Förderband 22 (schematisch angedeutet) in Teigförderrichtung 15 weitertransportiert wird.

Beim praktisch realisierten Teigbandformer gemäß Fig. 5 sind an einer Formungswalze 3 jeweils stimseitig zwei Führungsscheiben 8 angebracht, an deren äußeren Stirnseiten jeweils ein Zahnkranz 23 ausgebildet ist. Jeder der beiden Zahnkränze 23 steht mit einem Antriebszahnrad 24 kleineren Durchmessers in Eingriff, welche beide auf einer gemeinsamen Antriebswelle 25 aufgebracht sind. Letztere wird von einem Antriebsmotor 26 in Drehbewegung gesetzt, welcher an einem Seitenchassis 27 des Teigbandformers fixiert ist.

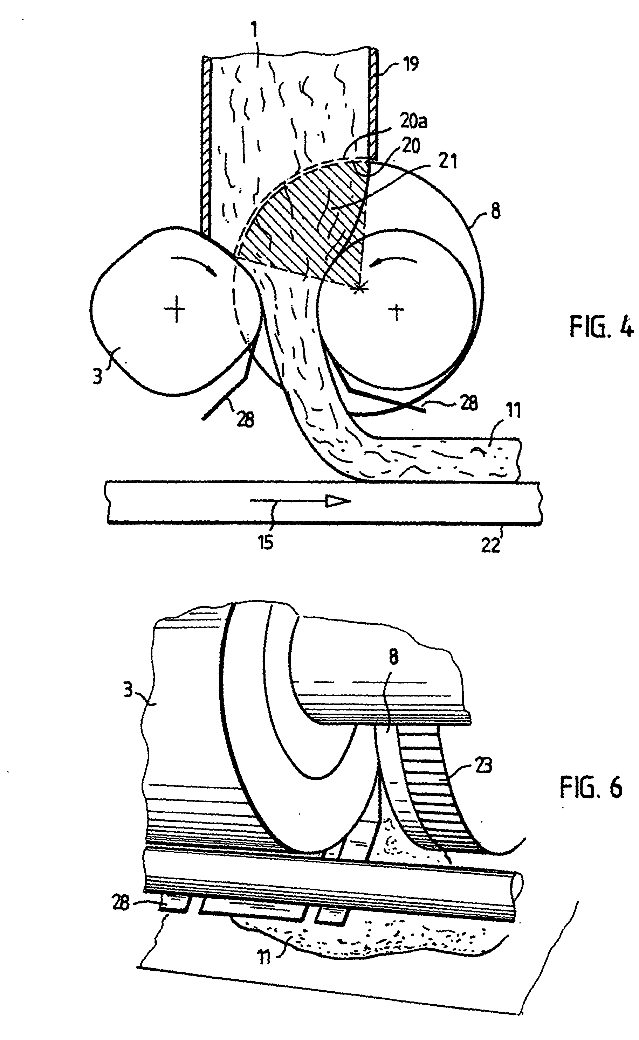

Gemäß Fig. 6 ist die Formungswalze 3 teilweise von der Führungsscheibe 8 mit Zahnkranz 23 überdeckt, wodurch beim Teigband 11 ein rissiger Teigrand vermieden ist. Ferner sind noch Abstreifermittel 28 erkennbar, mittels welchen das Teigband 11 mit geglättetem, längsseitigem Rand "abgeschält" wird.

### Bezugszeichenliste

- 1: ungeformte Teigmasse
- 2: vordere Formungswalze
- 3: hintere Formungswalze
- 4: Teigwalz-Durchgang
- 52: mittlere Querschnittslinie
- 53: mittlere Querschnittslinie
- 6: Durchgangsrichtung
- 72,73: Drehachsen
- 8: Führungsscheibe
- 9: Drehachse
- 10, 10a, 10b: Abstand
- 11: Teigband
- 12: Vorform-Teigdurchgang
- 13, 14: Vorformungswalzen
- 15: Teigförderrichtung
- 16: Zwischenwalze
- 17: Teig-Zwischendurchgang
- 18: Führungsscheiben-Drehrichtung
- 19: Trichter
- 20: Aussparung
- 20a: Aussparungsgrenze
- 21: Sektor der Führungsscheibe
- 22: Förderband
- 23: Zahnkranz
- 24: Antriebszahnrad
- 25: Antriebswelle
- 26: Antriebsmotor
- 27: Seitenchassis
- 28: Abstreifermittel

## Patentansprüche

1. Teigbandformer mit wenigstens zwei derart gegenüberliegenden Formungswalzen (2,3,13,14), dass ein formgebender Teigwalzspalt oder sonstiger Teigdurchgang (4,12) gebildet ist, und mit einer oder mehreren Führungsscheiben (8), die an Stirnseiten der Formungswalzen (2,3,13,14) derart angeordnet und so groß dimensioniert sind, dass sie den Teigwalzspalt oder -durchgang (4,12) quer zu dessen Durchgangsrichtung (6) einseitig oder beidseits überdecken, **dadurch gekennzeichnet, dass** wenigstens eine Führungsscheibe (8) um eine Drehachse (9) drehbar angeordnet ist, die im Abstand (10) zu wenigstens einer der Drehachsen (72,73) der Formungswalzen (2,3,13,14) verläuft.

2. Teigbandformer nach Anspruch 1, **dadurch gekennzeichnet, dass** die Drehachse (9) der Führungsscheibe (8) schräg oder parallel zur Drehachse (72,73) der Formungswalze (2,3) verläuft.

3. Teigbandformer nach Anspruch 1 oder 2, **dadurch gekennzeichnet, dass** die Führungsscheiben-Drehachse (9) gegenüber der Formungswalzen-Drehachse (72,73) in Richtung zum Inneren des Teigdurchgangs (4) versetzt ist.

4. Teigbandformer nach einem der vorangehenden Ansprüche, **dadurch gekennzeichnet, dass** die Führungsscheiben-Drehachse (9) mit ihrer gedachten Verlängerung im Abstand (10a,10b) von einer mittleren Querschnittsachse (52) oder durch eine Querschnittshälfte einer Formungswalze (2) verläuft.

5. Teigbandformer nach Anspruch 4, **dadurch gekennzeichnet, dass** die Führungsscheiben-Drehachse (9) auf der Seite der mittleren Querschnittsachse (52) verläuft, die dem Eingang oder Ausgang des Teigdurchgangs (4) am nächsten liegt.

6. Teigbandformer nach einem der vorangehenden Ansprüche, **dadurch gekennzeichnet, dass** die Führungsscheibe (8) die Stirnseiten von zwei oder mehr Formungswalzen (2,3,6,13) ganz oder teilweise abdeckt.

7. Teigbandformer nach einem der vorangehenden Ansprüche, **gekennzeichnet durch** eine Anordnung der einen oder mehreren Führungsscheiben (8) relativ zu den Formungswalzen (2,3,6,13,14) derart, dass der Eingangs- und/oder Ausgangsbereich des Teigdurchgangs (4,12) abgedeckt sind.

8. Teigbandformer nach einem der vorangehenden Ansprüche, **dadurch gekennzeichnet, dass** wenigstens eine der Führungsscheiben (8) mit einem oder mehreren Antriebsmitteln (23,24,25,26) verbunden ist, die von dem oder den Antriebsmitteln der einen oder mehreren Formungswalzen (2,3,6,13) getrennt ausgeführt und/oder unabhängig ansteuerbar sind.

9. Teigbandformer nach Anspruch 8, **dadurch gekennzeichnet, dass** das oder die Antriebsmittel (23-26) der einen oder mehreren Führungsscheiben (8) für eine höhere Geschwindigkeit eingestellt sind als die der Formungswalzen (2,3,6,13,14).

10. Teigbandformer nach Anspruch 8 oder 9, **dadurch gekennzeichnet, dass** die Antriebsmittel (23-26) der Führungsscheibe (8) ein Zahnradgetriebe (23,24) umfassen.

11. Teigbandformer nach Anspruch 10, **dadurch gekennzeichnet, dass** das Zahnradgetriebe (23,24) mit einem Zahnkranz (23) realisiert ist, der an einer dem Teigdurchgang (4,12) abgewandten Stirnseite der Führungsscheibe (8) angebracht ist und mit einem weiteren Glied (24) des Zahnradgetriebes (23,24) in Eingriff steht.

12. Teigbandformer nach einem der vorangehenden Ansprüche, **dadurch gekennzeichnet, dass** die Führungsscheibe (8) einen größeren Durchmesser als wenigstens eine der Formungswalzen ((2,3,6,13,14) aufweist.

13. Teigbandformer nach einem der vorangehenden Ansprüche **dadurch gekennzeichnet, dass** ein Trichter (19) für ungeformte Teigmasse (1) vorgesehen ist, von welchem aus der Teigdurchgang (4,12) eingangsseitig mit der Teigmasse (1) gespeist wird, und dass wenigstens eine Führungsscheibe (8) für den Trichter (19) in dessen Auslaufbereich einen Wandungsabschnitt (21) bildet.

14. Anordnung nach Anspruch 13, **dadurch gekennzeichnet, dass** im Auslaufbereich des Trichters (19) dessen Wandung mit einer Aussparung (20) gestaltet ist, deren Begrenzungskontur (20a) entsprechend dem Umfangsrand der in den Trichter-Auslaufbereich tauchenden Führungsscheibe (8) verläuft.

## Claims

1. Dough strip shaper with at least two shaping rollers (2, 3, 13, 14), which lie opposite one another such that a shaping dough rolling gap or other dough passage (4, 12) is formed, and with one or more guide disc(s) (8), which is/are arranged at front sides of the shaping rollers (2, 3, 13, 14) and dimensioned such that it/they cover(s) the dough rolling gap or passage (4, 12) transversely to the direction of passage (6) thereof on one or both side(s), **characterised in that** at least one guide disc (8) is arranged so as to be rotatable about a rotational axis (9), which extends at a spacing (10) from at least one of the rotational axes (72, 73) of the shaping rollers (2, 3, 13, 14).

2. Dough strip shaper according to Claim 1, **characterised in that** the rotational axis (9) of the guide disc (8) extends obliquely or parallel to the rotational axis (72, 73) of the shaping roller (2, 3).

3. Dough strip shaper according to Claim 1 or 2, **characterised in that** the guide disc rotational axis (9) is staggered with respect to the shaping roller rotational axis (72, 73) in the direction of the interior of the dough passage (4).

4. Dough strip shaper according to any one of the preceding Claims, **characterised in that** the guide disc rotational axis (9) extends with its imaginary prolongation at a spacing (10a, 10b) from a central cross-sectional axis (52) or through a cross-sectional half of a shaping roller (2).

5. Dough strip shaper according to Claim 4, **characterised in that** the guide disc rotational axis (9) extends on the side of the central cross-sectional axis (52) which lies closest to the entry or exit of the dough passage (4).

6. Dough strip shaper according to any one of the preceding Claims, **characterised in that** the guide disc (8) covers the front sides of two or more shaping rollers (2, 3, 6, 13) entirely or in part.

7. Dough strip shaper according to any one of the preceding Claims, **characterised by** an arrangement of the one or more guide disc(s) (8) relative to the shaping rollers (2, 3, 6, 13, 14) such that the entry and/or exit region of the dough passage (4, 12) are/is covered.

8. Dough strip shaper according to any one of the preceding Claims, **characterised in that** at least one of the guide discs (8) is connected to one or more drive means (23, 24, 25, 26), which is/are constructed separately from and/or can be actuated independently of the drive means of the one or more shaping roller(s) (2, 3, 6, 13).

9. Dough strip shaper according to Claim 8, **characterised in that** the drive means (23-26) of the one or more guide disc(s) (8) is/are set for a speed which is higher than that of the shaping rollers (2, 3, 6, 13, 14).

10. Dough strip shaper according to Claim 8 or 9, **characterised in that** the drive means (23-26) of the guide disc (8) comprise a toothed-wheel gear unit (23, 24).

11. Dough strip shaper according to Claim 10, **characterised in that** the toothed-wheel gear unit (23, 24) is effected with a ring gear (23), which is fitted to a front side of the guide disc (8) which is remote from the dough passage (4, 12) and is in mesh with a further member (24) of the toothed-wheel gear unit (23, 24).

12. Dough strip shaper according to any one of the preceding Claims, **characterised in that** the guide disc (8) has a larger diameter than at least one of the shaping rollers (2, 3, 6, 13, 14).

13. Dough strip shaper according to any one of the preceding Claims, **characterised in that** a funnel (19) for unshaped dough (1) is provided, from which funnel the dough passage (4, 12) is supplied on the entry side with the dough (1), and that at least one guide disc (8) forms a wall portion (21) for the funnel (19) in the discharge region thereof.

14. Arrangement according to Claim 13, **characterised in that** the wall of the funnel (19) is configured with a recess (20) in the discharge region of the latter, the boundary contour (20a) of which recess extends in accordance with the circumferential edge of the guide disc (8) which enters the funnel discharge region.

## Revendications

1. Machine de formage d'une bande de pâte, comprenant au moins deux rouleaux de formage (2, 3, 13, 14) opposés l'un à l'autre de façon telle, que soit formé un interstice de roulage de pâte ou autre passage de pâte (4, 12) conférant une forme à la pâte, et comprenant un ou plusieurs disques de guidage (8) qui sont disposés au niveau de faces frontales des rouleaux de formage (2, 3, 13, 14) et sont dimensionnés de façon telle, qu'ils couvrent, d'un côté ou des deux côtés, l'interstice de roulage de pâte ou le passage de pâte (4, 12) transversalement à sa direction de passage (6), **caractérisée en ce qu'**au moins un disque de guidage (8) est disposé rotatif autour d'un axe de rotation (9) qui s'étend à une distance (10) d'au moins l'un des axes de rotation (72, 73) des rouleaux de formage (2, 3, 13, 14).

2. Machine de formage d'une bande de pâte selon la revendication 1, **caractérisée en ce que** l'axe de rotation (9) du disque de guidage (8) s'étend de manière oblique ou parallèle par rapport à l'axe de rotation (72, 73) du rouleau de formage (2, 3).

3. Machine de formage d'une bande de pâte selon la revendication 1 ou 2, **caractérisée en ce que** l'axe de rotation (9) des disques de guidage est décalé par rapport à l'axe de rotation (72, 73) des rouleaux de formage, en direction de l'intérieur du passage de pâte (4).

4. Machine de formage d'une bande de pâte selon l'une des revendications précédentes, **caractérisée en ce que** l'axe de rotation (9) des disques de guidage, avec son prolongement fictif, s'étend à une distance (10a, 10b) d'un axe médian de section transversale (52) ou à travers par une moitié de section transversale d'un rouleau de formage (2).

5. Machine de formage d'une bande de pâte selon la revendication 4, **caractérisée en ce que** l'axe de rotation (9) des disques de guidage s'étend sur le côté de l'axe médian de section transversale (52), qui est le plus proche de l'entrée ou de la sortie du passage de pâte (4).

6. Machine de formage d'une bande de pâte selon l'une des revendications précédentes, **caractérisée en ce que** le disque de guidage (8) recouvre entièrement ou partiellement les faces frontales de deux rouleaux de formage (2, 3, 6, 13) ou davantage.

7. Machine de formage d'une bande de pâte selon l'une des revendications précédentes, **caractérisée par** une disposition desdits un ou plusieurs disques de guidage (8) par rapport aux rouleaux de formage (2, 3, 6, 13, 14) de façon telle que la zone d'entrée et/ou la zone de sortie du passage de pâte (4, 12) soient recouvertes.

8. Machine de formage d'une bande de pâte selon l'une des revendications précédentes, **caractérisée en ce que** l'un au moins des disques de guidage (8) est relié à un ou plusieurs moyens d'entraînement (23, 24, 25, 26) qui sont réalisés de façon distincte ou séparée et/ou peuvent être commandés indépendamment du ou des moyens d'entraînement desdits un ou plusieurs rouleaux de formage (2, 3, 6, 13, 14).

9. Machine de formage d'une bande de pâte selon la revendication 8, **caractérisée en ce que** les moyens d'entraînement (23-26) desdits un ou plusieurs disques de guidage (8) sont réglés pour une vitesse plus élevée que celle des rouleaux de formage (2, 3, 6, 13, 14).

10. Machine de formage d'une bande de pâte selon la revendication 8 ou 9, **caractérisée en ce que** les moyens d'entraînement (23-26) du disque de guidage (8) comprennent une transmission à roues dentées (23, 24).

11. Machine de formage d'une bande de pâte selon la revendication 10, **caractérisée en ce que** la transmission à roues dentées (23, 24) est réalisée avec une couronne dentée (23) qui est placée sur une face frontale du disque de guidage (8), tournée à l'opposée du passage de pâte (4, 12), et qui est en prise avec un autre organe (24) de la transmission à roues dentées (23, 24).

12. Machine de formage d'une bande de pâte selon l'une des revendications précédentes, **caractérisée en ce que** le disque de guidage (8) présente un diamètre plus grand que celui de l'un au moins des rouleaux de formage (2, 3, 13, 14).

13. Machine de formage d'une bande de pâte selon l'une des revendications précédentes, **caractérisée en ce qu'**il est prévu pour la masse de pâte (1) non mise en forme, une trémie (19) à partir de laquelle le passage de pâte (4, 12) est alimenté avec la masse de pâte (1) sur son côté entrée, et **en ce qu'**au moins un disque de guidage (8) forme un tronçon de paroi (21 ) pour la trémie ( 19), dans sa zone de sortie.

14. Agencement selon la revendication 13, **caractérisé en ce que** dans la zone de sortie de la trémie (19), la paroi de cette dernière est pourvue d'un évidement (20) dont le contour de délimitation (20a) s'étend d'une façon correspondant à celui du bord périphérique du disque de guidage (8) s'engageant dans la zone de sortie de la trémie.
